# EUROPÄISCHE PATENTSCHRIFT

(11) **EP 3 969 323 B1**
(45) Veröffentlichungstag und Bekanntmachung des Hinweises auf die Patenterteilung: **21.06.2023**
(21) Anmeldenummer: 20720029.6
(22) Anmeldetag: 17.04.2020
(51) Int. Cl.: B60L 53/67, G05F 1/70, H02J 3/16, B60L 53/30

(54) **LADEMANAGEMENTVORRICHTUNG FÜR EINE LADEANORDNUNG**
CHARGING MANAGEMENT DEVICE FOR A CHARGING ARRANGEMENT
DISPOSITIF DE GESTION DE CHARGE CONÇU POUR UN DISPOSITIF DE CHARGE

(30) Priorität: 15.05.2019 DE 102019112684
(43) Veröffentlichungstag der Anmeldung: 23.03.2022
(73) Patentinhaber: Compleo Charging Technologies GmbH, 44309 Dortmund (DE)
(72) Erfinder: OBERGÜNNER, Hermann, 42897 Remscheid (DE); SKRBIC, Srdan, 44265 Dortmund (DE); KLEDEWSKI, Ingo, 44319 Dortmund (DE)
(74) Vertreter: Gottschald Patentanwälte Partnerschaft mbB
(86) Internationale Anmeldenummer: PCT/EP2020/060827
(87) Internationale Veröffentlichungsnummer: WO 2020/229087

(56) Entgegenhaltungen:
- EP-A1- 2 958 222
- EP-A1- 3 184 352
- EP-A1- 3 335 925
- WO-A1-2018/193091
- WO-A2-2012/128626
- CN-A- 105 896 561
- CN-A- 106 169 763
- CN-A- 106 505 579
- DE-A1-102011 087 407
- US-A1- 2008 039 979
- US-A1- 2010 134 067
- US-A1- 2011 176 343
- US-A1- 2018 159 360

## Beschreibung

Die Anmeldung betrifft eine Lastmanagementvorrichtung für eine Ladeanordnung mit einer Mehrzahl von Ladestationen zum Laden von Elektrofahrzeugen. Darüber hinaus betrifft die Anmeldung ein Ladesystem, ein Verfahren und ein Computerprogramm.

Der Aufbau der Ladeinfrastruktur ist von entscheidender Bedeutung für eine flächendeckende Etablierung von Elektromobilität. Dazu ist es insbesondere notwendig, in öffentlichen als auch in teilöffentlichen Räumen Ladestationen für Elektrofahrzeuge in großem Maße zu installieren. In der Regel werden Ladesysteme mit einem Backendsystem und einer Mehrzahl von Ladestationen installiert.

Neben der Aufstellung von Ladestationen an Straßen und Wegen bietet sich insbesondere die Installierung von Ladestationen in Parkanordnungen an, insbesondere in Form von Parkhäusern. Hierbei werden vermehrt Ladeanordnungen mit einer Mehrzahl von Ladestationen installiert.

Grundsätzlich ist es bei einem Betrieb eines elektrischen Verbrauchers, wie beispielsweise einer Ladestation, das Ziel, die durch den Verbraucher im bestimmungsgemäßen Betrieb verursachte Blindleistung zu reduzieren, insbesondere (nahezu) vollständig zu kompensieren. Hierzu ist es aus dem Stand der Technik bekannt, eine Ladestation mit einem Blindleistungskompensationsmodul auszustatten. Ein Blindleistungskompensationsmodul ist eingerichtet zum Reduzieren der durch die Ladestation im Betrieb, also bei einem Austausch elektrischer Leistung mit einem Elektrofahrzeug, insbesondere zum Laden der Batterie des Elektrofahrzeugs, verursachte Blindleistung zu reduzieren.

Blindleistungskompensationsmodule sind aus der EP 3 335 925 A1 und der US 2018/0159360 A1 bekannt. Aus der US 2010/0134067A1 ist außerdem ein Lastverteilungsmodul bekannt.

Der Einbau eines Blindleistungskompensationsmoduls in Form von elektrischen Komponenten in die Ladestation ist jedoch mit dem Nachteil verbunden, dass in der Ladestation eine erhöhte elektrische Verlustleistung entsteht. Zudem ist der in einer Ladestation zur Verfügung stehende Bauraum in der Regel beschränkt, so dass sich der Einbau regelmäßig komplex und schwierig gestaltet. Schließlich erhöhen sich die Produktionskosten einer Ladestation durch eine entsprechende Installierung eines Blindleistungskompensationsmoduls innerhalb des Gehäuses der Ladestation erheblich.

Daher liegt der vorliegenden Anmeldung die Aufgabe zugrunde, eine Möglichkeit zu schaffen, bei der in einfacherer Weise eine bei einem bestimmungsgemäßen Betrieb einer Mehrzahl von Ladestationen verursachte Blindleistung zumindest reduziert werden kann.

Die Aufgabe wird gemäß einem ersten Aspekt der Anmeldung gelöst durch eine Lastmanagementvorrichtung für eine Ladeanordnung mit einer Mehrzahl von Ladestationen zum Laden von Elektrofahrzeugen nach Anspruch 1. Die Lastmanagementvorrichtung umfasst mindestens ein Lastmanagementmodul, eingerichtet zum Einstellen einer Leistungsverteilung an der Mehrzahl von Ladestationen, zumindest basierend auf mindestens einer Verteilregel und einer maximal verfügbaren Leistung. Die Lastmanagementvorrichtung umfasst mindestens ein ansteuerbares Blindleistungskompensationsmodul, eingerichtet zum Reduzieren einer durch die Ladeanordnung verursachten Blindleistung. Das Lastmanagementmodul ist eingerichtet zum Ansteuern des Blindleistungskompensationsmoduls, basierend auf mindestens einem bereitgestellten Blindleistungsparameter und der eingestellten Leistungsverteilung, derart, dass die durch die Ladeanordnung verursachte Blindleistung (zumindest) reduziert wird.

Indem im Gegensatz zum Stand der Technik anmeldungsgemäß eine Lastmanagementvorrichtung für eine Ladeanordnung mit einer Mehrzahl von Ladestationen bereitgestellt wird, die zusätzlich zur Lastmanagementsteuerung zur Blindleistungskompensation der durch die Ladeanordnung verursachten Blindleistung eingerichtet ist, wird in einfacher und gleichzeitig verbesserter Weise zumindest eine Reduktion dieser Blindleistung erreicht. Ein Einbau eines Blindleistungskompensationsmoduls in eine Ladestation kann entfallen. Die Kosten können reduziert werden. Von besonderen Vorteil ist, dass die Blindleistungskompensation nicht nur abhängig von einem bereitgestellten Blindleistungsparameters, sondern zusätzlich abhängig von der Leistungsverteilung an der gesamten Ladeanordnung (und nicht nur ein einer Ladestation) erfolgt, so dass insbesondere Schaltvorgänge in dem Blindleistungskompensationsmodul reduziert werden können und wesentliche schnellere Reaktionszeiten erreicht werden.

Die anmeldungsgemäße Lastmanagementvorrichtung wird insbesondere für eine Ladeanordnung mit zwei oder vorzugsweise mehr Ladestationen eingesetzt. Eine anmeldungsgemäße Ladestation umfasst mindestens einen Ladepunkt, eingerichtet zum Abgeben von elektrischer Leistung (bzw. Energie bzw. Strom). Vorzugsweise kann der Ladepunkt auch zur Aufnahme von elektrischer Leistung eingerichtet sein. Der Ladepunkt kann insbesondere eine elektrische Schnittstelle sein, beispielsweise in Form eines fest angeschlagenen Ladekabels mit einem Ladeanschluss (z.B. Ladestecker) und/oder einem Ladenanschluss zum Anschließen eines Ladekabels (z.B. eine Ladesteckeraufnahme, beispielsweise in Form einer Ladesteckerbuchse). Unter einem fest angeschlagenen Ladekabel ist insbesondere zu verstehen, dass ein Nutzer das Ladekabel nicht zerstörungsfrei von der Ladevorrichtung trennen kann.

Handelsübliche Ladestationen können beispielsweise eine maximale Wirkleistung von 22 kW liefern. Es versteht sich, dass bei anderen Varianten der Anmeldung auch Ladestationen mit anderen maximalen Wirkleistungswerten eingesetzt werden können.

Die Ladestation kann eine Ladevorrichtung umfassen, die in herkömmlicher Weise über Komponenten verfügen kann, um einen Stromfluss von einer Stromquelle (z.B. ein öffentliches Stromnetz, Energieerzeuger etc.) über den Ladepunkt und einem Ladekabel zu ermöglichen. Hierdurch kann ein elektrisch betriebenes Fahrzeug bzw. dessen elektrischen Energiespeicher geladen (oder entladen) werden. Unter einem Elektrofahrzeug ist vorliegend ein Fahrzeug zu verstehen, das zumindest teilweise elektrisch betrieben werden kann und einen wiederaufladbaren elektrischen Speicher umfasst.

Die Ladevorrichtung kann in der Ladestation integriert oder als "Wallbox" gebildet sein. Insbesondere kann die Ladevorrichtung ein Teil der Ladestation sein. Auch kann die Ladevorrichtung, insbesondere die Komponenten bzw. die Ladetechnik, in einer Wand oder einem Boden integriert sein. Es versteht sich, dass eine bidirektionale Strom- bzw. Leistungsübertragung über die Ladekabel und die Ladetechnik der Ladevorrichtung erfolgen kann.

Vorzugsweise kann einen Ladeanordnung über einen gemeinsamen elektrischen Ladeanordnungsanschluss an ein elektrisches Versorgungsnetzes verfügen. Beispielsweise kann der Anschluss einen Transformator umfassen. Insbesondere kann jede Ladestation an ein Zwischenspannungsnetz (mit mindestens einer Verteilleitung zu den Ladestationen) bzw. eine Zwischenspannungsebene (z.B. eine AC-Zwischenspannungsebene) angeschlossen sein, die wiederum über den elektrischen vorzugsweise an das elektrische Versorgungsnetz (oder eine andere Stromquelle, wie ein Erzeuger) angeschlossen sein. Die Lastmanagementvorrichtung kann in der Zwischenspannungsebene angeordnet sein. Zumindest das Blindleistungskompensationsmodul kann zwischen dem elektrischen Ladeanordnungsanschluss und den Ladestationen zwischengeschaltet sein.

Beispielsweise kann ein elektrischer Eingang des Blindleistungskompensationsmoduls an den gemeinsamen elektrischen Ladeanordnungsanschluss gekoppelt sein. Ferner kann Blindleistungskompensationsmodul über einen elektrischen Ausgang verfügen, an dem über mindestens eine Verteilleitung die Ladestationen der Ladenanordnung angeschlossen sein können.

Die Lastmanagementvorrichtung umfasst mindestens ein Lastmanagementmodul, eingerichtet zum Einstellen einer (elektrischen) Leistungsverteilung an der Mehrzahl von Ladestationen, zumindest basierend auf mindestens einer Verteilregel und der maximal verfügbaren Leistung, insbesondere die an dem vorgenannten elektrischen Anschluss der Ladeanordnung zur Verfügung stehenden Leistung. Dies meint insbesondere, dass entsprechend der mindestens einen Verteilregel die zur Verfügung stehenden elektrische Leistung an die Mehrzahl von Ladestationen verteilt wird, so dass diese, abhängig von der jeweils verteilten Leistung, wiederum jeweils an ein zu ladendes Elektrofahrzeug abgegeben werden kann.

Wie bereits beschrieben wurde, kann die Lastmanagementvorrichtung mindestens ein Blindleistungskompensationsmodul aufweisen. Wenn ein Mehrphasennetz vorgesehen ist, kann insbesondere für jede Phase des Mehrphasennetzes ein separates, ansteuerbares Blindleistungskompensationsmodul vorgesehen sein. Das Blindleistungskompensationsmodul kann über mindestens ein zuschaltbares (reaktives) Bauelement verfügen, welches durch eine entsprechende Ansteuerung hinzu- oder weggeschaltet werden kann, um hierdurch die durch die Ladeanordnung (an einer Phase) verursachte Blindleistung zumindest zu reduzieren.

Zum entsprechenden Ansteuern weist die Lastmanagementvorrichtung das Lastmanagementmodul auf. Insbesondere ist anmeldungsgemäß vorgesehen, dass das Lastmanagementmodul eingerichtet ist, zum Verteilen der verfügbaren Leistung und zum Ansteuern des Blindleistungskompensationsmoduls. Die Ansteuerung erfolgt hierbei abhängig von der eingestellten Leistungsverteilung und einem bereitgestellten Blindleistungsparameter, insbesondere einem an oder in der Ladeanordnung gemessenen und für die Blindleistung der Ladeanordnung relevanten Parameter. Insbesondere erfolgt die Ansteuerung derart, dass die durch die Ladeanordnung verursachte Blindleistung zumindest reduziert wird, insbesondere minimiert wird. Gemäß einer ersten Ausführungsform der anmeldungsgemäßen Lastmanagementvorrichtung kann das Blindleistungskompensationsmodul mindestens ein ansteuerbares Schaltelement (vorzugsweise eine Vielzahl von Schaltelementen) und mindestens einen kapazitiven Verbraucher und/oder mindestens einen induktiven Verbraucher umfassen. Insbesondere kann jedem kapazitiven Verbraucher bzw. kapazitiven Bauelement (z.B. Kondensator) mindestens ein Schaltelement bzw. Schalter zugeordnet sein, um diesen Verbraucher (bei Bedarf) zuzuschalten bzw. wegzuschalten. Darüber hinaus kann jedem induktiven Verbraucher bzw. induktiven Bauelement (z.B. Induktivität) mindestens ein Schaltelement bzw. Schalter zugeordnet sein, um diesen Verbraucher (bei Bedarf) zuzuschalten bzw. wegzuschalten.

Das Schaltelement kann eingerichtet sein zum Hinzuschalten des mindestens einen kapazitiven Verbrauchers und/oder des mindestens einen induktiven Verbraucher, basierend auf einer Ansteuerinformation des Lastmanagementmoduls. Vorzugsweise kann eine Mehrzahl von induktiven und/oder kapazitiven Verbrauchern mit vorzugsweise zumindest einer entsprechenden Anzahl an individuell ansteuerbaren Schaltelementen vorgesehen sein. Dies ermöglicht eine optimale Blindleistungskompensationen auch bei einer Mehrzahl von unterschiedlichen Arbeitspunkten, in denen die Ladeanordnung betreibbar ist (insbesondere aufgrund des zeitlich variablen Leistungsverlaufs).

Gemäß einer bevorzugten Ausführungsform der anmeldungsgemäßen Lastmanagementvorrichtung kann das Lastmanagementmodul eingerichtet sein zum Einstellen der (elektrischen) Leistungsverteilung an der Mehrzahl von Ladestationeri, basierend auf einem eingestellten Schaltzustand des Blindleistungskompensationsmoduls. Insbesondere kann vorgesehen sein, dass bei einer detektierten Laständerungen (beispielsweise aufgrund eines beendeten oder neu gestarteten Ladevorgangs) die Leistungsverteilung derart angepasst wird, dass der Arbeitspunkt der Ladeanordnung im Wesentlichen gleich bleibt, um ein Schalten eines Schaltelements zu vermeiden. Beispielsweise kann bei der Einstellung der (elektrischen) Leistungsverteilung gemäß einer Verteilregel eine (noch zu verteilende) Leistungsreserve berücksichtigt sein, die zur Beibehaltung eines Arbeitspunkts bei Bedarf durch das Lastmanagementmodul verteilt werden kann.

So verursacht ein Schalten von hohen Leistungen eine Störung im Netz und kann zu unerwünschten Peaks und/oder Schwingungen führen. Zudem reduziert sich die Lebensdauer eines Schaltelements insbesondere abhängig von den durchgeführten Schaltvorgängen. Durch die anmeldungsgemäße Ausführungsform können die Schaltvorgänge minimiert werden.

Insbesondere kann bei Detektion einer Laständerung oder einer (unmittelbar) bevorstehenden Laständerung an der Ladeanordnung zunächst eine Leistungsverteilungsanpassungen erfolgen und, vorzugsweise nachgelagert (falls noch erforderlich) die oben beschriebene Ansteuerung des Blindleistungskompensationsmoduls, insbesondere von einem Schaltelement, um die Blindleistung zu reduzieren.

Für eine Einstellung der Leistungsverteilung kann, gemäß einer weiteren Ausführungsform der anmeldungsgemäßen Lastmanagementvorrichtung, die Lastmanagementvorrichtung mindestens ein (drahtgebundenes und/oder drahtloses) Kommunikationsmodul umfassen. Das Lastmanagementmodul kann eingerichtet sein zum Einstellen der Leistungsverteilung an der Mehrzahl von Ladestationen durch Bewirken einer Aussendung mindestens einer Steuerinformation an mindestens eine Ladestation durch das Kommunikationsmodul. Die Steuerinformation kann ein Solldatensatz sein, in dem Sollparameter, wie Sollstrom, Sollleistung etc. und ggf. eine Zeitdauer, für die diese Sollparameter gültig sind, enthalten sein können. Vorzugsweise jede Ladestation kann individuell mit einer entsprechenden Sollinformation ansteuerbar sein. Eine lokale Steuereinheit der Ladestation bewirkt anschließend ein Betreiben der Ladestation gemäß der erhaltenen Steuerinformation. In einfacher und zuverlässiger Weise kann eine Leistungsverteilung bei einer Ladeanordnung eingestellt werden.

Gemäß einer weiteren Ausführungsform der anmeldungsgemäßen Lastmanagementvorrichtung kann der mindestens eine bereitgestellte Blindleistungsparameter ausgewählt sein aus der Gruppe, umfassend:
- Strom,
- Spannung,
- Scheinleistung,
- Wirkleistung,
- Blindleistung,
- Netzfrequenz.

Insbesondere kann die Lastmanagementvorrichtung mindestens ein Messmodul umfassen, eingerichtet zum Messen mindestens eines Blindleistungsparameters (an oder in der Ladeanordnung). Vorzugsweise kann eine Mehrzahl der vorgenannten Parameter insbesondere an der Zwischenspannungsebene gemessen und zum Beispiel dem Lastmanagementmodul zur Verfügung zu stellen, um zumindest abhängig von dem gemessenen und bereitgestellten mindestens einem Blindleistungsparameter eine Blindleistungskompensation zu bewirken. Insbesondere kann aus dem mindestens einen Blindleistungsparameter die aktuelle bzw. augenblickliche Blindleistung der Ladeanordnung bestimmbar sein, beispielsweise durch das Lastmanagementmodul.

Gemäß einer bevorzugten Ausführungsform einer Lastmanagementvorrichtung kann das Lastmanagementmodul mindestens einen Blindleistungsregler, mindestens eine Lastmanagementsteuereinheit und mindestens eine übergeordnete Steuereinheit umfassen. Die mindestens eine Lastmanagementsteuereinheit kann eingerichtet sein zum Einstellen der Leistungsverteilung an der Mehrzahl von Ladestationen, zumindest basierend auf der mindestens einen Verteilregel, der maximal verfügbaren Leistung und insbesondere dem von der übergeordneten Steuereinheit bereitgestellten Schaltzustand des Blindleistungskompensationsmoduls. Der Blindleistungsregler kann eingerichtet sein zum Ansteuern des Blindleistungskompensationsmoduls, basierend auf dem mindestens einen bereitgestellten Blindleistungsparameter und der von der übergeordneten Steuereinheit bereitgestellten, eingestellten Leistungsverteilung, derart, dass die durch die Ladeanordnung verursachte Blindleistung reduziert wird. In einfacher Weise kann eine insbesondere optimale Blindleistungskompensation bei einer möglichst geringen Anzahl von Schaltvorgängen erfolgen.

Vorzugsweise kann die übergeordnete Steuereinheit ferner eingerichtet sein zum Ansteuern des Blindleistungsreglers und/oder der Lastmanagementsteuereinheit, basierend auf historischen Schaltzuständen des Blindleistungskompensationsmoduls und/oder historischen Ladezuständen der Ladeanordnung. Insbesondere kann eine (zumindest nahezu) kontinuierliche Aufzeichnung der entsprechenden Zustände (z.B. durch die Lastmanagementvorrichtung) erfolgen, vorzugsweise zusammen mit den jeweils gemessenen mindestens einen Blindleistungsparameter und/oder der mindestens einen angewendeten Verteilregel. Die übergeordnete Steuereinheit kann beispielsweise mindestens einen maschinellen Lernalgorithmus (beispielsweise ein neuronales Netz oder dergleichen) umfassen. Basierend auf einer Auswertung der historischen Daten kann insbesondere die Leistungsverteilung (z.B. durch Anpassen der mindestens einen Verteilregel und/oder Hinzufügen einer weiteren Verteilregel) optimiert und/oder die Blindleistungskompensationsansteuerung optimiert werden.

Wie bereits beschrieben wurde, erfolgt die Leistungsverteilung zumindest auch abhängig von mindestens einer Verteilregel. Die anzuwendende Verteilregel kann von der Anzahl der aktuell tatsächlich zum Laden (oder Entladen) genutzten Ladestationen abhängen. Die mindestens eine bestimmte Verteilregel kann beispielsweise in einem auslesbaren Speicher der Lastmanagementvorrichtung gespeichert sein.

Die mindestens eine bestimmte Verteilregel kann, gemäß einer Ausführungsform, ausgewählt sein aus der Gruppe, umfassend:
- die (an der Ladeanordnung maximal) verfügbare Leistung wird vollständig bis zur Detektion einer Beendigung eines Ladevorgangs an die Ladestation verteilt, die als erster mit einem Ladeanschluss eines Elektrofahrzeugs gekoppelt wurde,
- die (an der Ladeanordnung maximal) verfügbare Leistung wird gleichmäßig auf die mindestens zwei Ladestationen verteilt (anders ausgedrückt kann eine statische Verteilung erfolgen),
- die (an der Ladeanordnung maximal) verfügbare Leistung wird abhängig von einer vorgegebenen Priorität der Ladestationen auf die mindestens zwei Ladestationen verteilt,
- die (an der Ladeanordnung maximal) verfügbare Leistung wird abhängig von einer erhaltenen Priorität der zu ladenden Elektrofahrzeuge auf die mindestens zwei Ladestationen verteilt, und
- die (an der Ladeanordnung maximal) verfügbare Leistung wird abhängig von einer vorgegebenen Stufenfunktion gestuft an die mindestens zwei Ladestationen verteilt.

Gemäß einer ersten Verteilregel kann die verfügbare Leistung vollständig, bis zur Detektion einer Beendigung von diesem Ladevorgang, an die Ladestation (oder einem bestimmten Ladepunkt einer Ladestation) verteilt werden, der als erster mit einem Ladeanschluss eines Elektrofahrzeugs gekoppelt wurde. Anders ausgedrückt ist in dieser Verteilregel das Prinzip "first come - first serve" implementiert. Das Elektrofahrzeug, welches (zeitlich gesehen) zuerst verbunden wurde, wird vollgeladen, mit der maximal zulässigen Leistung an dem entsprechenden Ladepunkt. Falls noch weitere Leistung verfügbar ist, kann ein weiteres Elektrofahrzeug, welches zu einem späteren Zeitpunkt an eine weitere Ladestation (und/oder weiteren Ladepunkt) angeschlossen wurde, mit der verbleibenden Leistung geladen werden (usw.). Anschließend wird das Elektrofahrzeug, welches (zeitlich gesehen) als nächstes an die Ladeanordnung angeschlossen wurde, vollständig geladen bzw. mit der maximal zulässigen Leistung, usw.

In einer weiteren Verteilregel kann das Prinzip "equal charging" implementiert sein. Die an der Ladeanordnung maximal verfügbare Leistung kann gleichmäßig auf die mindestens zwei Ladestationen verteilt werden (für die eine Kopplungsinformation vorliegt, also an der jeweils ein Elektrofahrzeug geladen wird). Alle angeschlossenen Elektrofahrzeuge erhalten bei dieser Verteilregel die gleiche Leistung, so dass z.B. bei einer 33 kW Ladeanordnung mit drei (gekoppelten) (z.B. 22kW) Ladestationen, also bei drei erhaltenen Kopplungsinformationen, jedes Fahrzeug ca. 11 kW Leistung erhält.

In anderen Verteilregeln können Priorisierungen vorgesehen sein. Beispielsweise kann die verfügbare Leistung abhängig von der jeweiligen Priorität der mindestens zwei Ladestationen und/oder der zu ladenden Elektrofahrzeuge auf die mindestens zwei Ladestationen verteilt werden.

Ferner kann in einer alternativen Verteilregel das Prinzip "stair charging" implementiert sein. Die verfügbare Leistung an der Ladeanordnung kann bei dieser Verteilregel abhängig von einer vorgegebenen Stufenfunktion gestuft an die mindestens zwei Ladestationen verteilt werden (für die eine Kopplungsinformation vorliegt). Jedes Elektrofahrzeug, welches an die Ladeanordnung angeschlossen wird, kann Leistung erhalten, wobei gestuft, das erste Elektrofahrzeug die meiste Leistung erhalten kann und sukzessive nach Beladung jedes weitere "step by step", ähnlich einer Treppenfunktion bzw. Stufenfunktion, weniger Leistung erhalten kann.

Hierbei kann eine Verteilregel zumindest teilweise angepasst oder übersteuert werden (z.B. durch die übergeordnete Steuereinheit), um insbesondere einen Arbeitspunkt beizubehalten (wie oben beschrieben wurde). Insbesondere können hierdurch Schaltvorgänge in dem Blindleistungskompensationsmodul minimiert werden. Zudem kann in einer Verteilregel eine (zuvor beschriebene) Leistungsreserve berücksichtigt sein. Ferner können Vorgaben von einem Netzbetreiber in einer Verteilregel abbildbar sein.

Gemäß einer weiteren Ausführungsform kann die Ladeanordnung, insbesondere eine Ladestation der Ladeanordnung, mindestens eine Schnittstelle umfassen, eingerichtet zum Vorgeben der mindestens einen bestimmten Verteilregel. Beispielsweise kann das Vorgeben ein Auswählen einer Verteilregel aus einer Mehrzahl zuvor beschriebener Verteilregeln mittels der Schnittstelle umfassen. Die Verteilregeln können beispielsweise in einem Speicher der Lastmanagementvorrichtung (vorab) gespeichert sein. Auch kann das Vorgeben ein Übertragen einer bestimmten Verteilregel an die Lastmanagementvorrichtung mittels der Schnittstelle umfassen, beispielsweise von einem Backendsystem.

Ein weiterer Aspekt der Anmeldung ist ein Ladesystem für Elektrofahrzeuge. Das Ladesystem umfasst mindestens eine Ladeanordnung mit einer Mehrzahl von Ladestationen. Das Ladesystem umfasst mindestens eine zuvor beschriebene Lastmanagementvorrichtung nach einem der vorherigen Ansprüche. Insbesondere ist bei diesem Lastsystem die Lastmanagementvorrichtung zwischen den Ladestationen der Ladeanordnung und dem Ladeanordnungsanschluss (z.B. umfassend einen Transformator) geschaltet.

Ein noch weiterer Aspekt der Anmeldung ist ein Verfahren zum Betreiben einer Lastmanagementvorrichtung, insbesondere einer zuvor beschriebenen Lastmanagementvorrichtung. Das Verfahren umfasst:
- Einstellen einer Leistungsverteilung an der Mehrzahl von Ladestationen, zumindest basierend auf mindestens einer Verteilregel und der verfügbaren Leistung, und
- Ansteuern eines Blindleistungskompensationsmoduls, basierend auf mindestens einem bereitgestellten Blindleistungsparameter und der eingestellten Leistungsverteilung, derart, dass die durch die Ladeanordnung verursachte Blindleistung reduziert wird.

Ein noch weiterer Aspekt der Anmeldung ist ein Computerprogramm mit Instruktionen ausführbar auf einem Prozessor, insbesondere einem Prozessor der Lastmanagementvorrichtung, derart, dass eine (z.B. zuvor beschriebene) Lastmanagementvorrichtung gemäß dem zuvor beschriebenen Verfahren betrieben wird.

Das Computerprogramm, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Neben dem Programmspeicher kann eine Lastmanagementvorrichtung vorzugsweise zusätzlich einen Hauptspeicher aufweisen, zum Beispiel einen flüchtigen oder nichtflüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Lastmanagementvorrichtung kann beispielsweise Zwischenergebnisse oder ähnliches in dem Hauptspeicher speichern.

Es sei angemerkt, dass anmeldungsgemäße Elemente, Module etc. aus Hardwarekomponenten (z.B. Prozessoren, Schnittstellen, Speichermitteln etc.) und/oder Softwarekomponenten (z.B. durch einen Prozessor ausführbarer Code) gebildet sein können.

Die Merkmale der Lastmanagementvorrichtungen, Ladesysteme, Verfahren und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Lastmanagementvorrichtung, das anmeldungsgemäße Ladesystem, das anmeldungsgemäße Verfahren und das anmeldungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Lastmanagementvorrichtung gemäß der vorliegenden Anmeldung,
- Fig. 2: eine schematische Ansicht eines Ausführungsbeispiels eines Blindleistungskompensationsmoduls gemäß der vorliegenden Anmeldung,
- Fig. 3: eine schematische Ansicht eines weiteren Ausführungsbeispiels einer Lastmanagementvorrichtung gemäß der vorliegenden Anmeldung,
- Fig. 4: eine schematische Ansicht eines Ausführungsbeispiels eines Ladesystems gemäß der vorliegenden Anmeldung,
- Fig. 5: ein Diagramm eines Ausführungsbeispiels eines Verfahrens gemäß der vorliegenden Anmeldung, und
- Fig. 6: ein Diagramm zur Erläuterung der Blindleistungskompensation gemäß einem Ausführungsbeispiel der vorliegenden Anmeldung.

In den Figuren werden für gleiche Elemente gleiche Bezugszeichen verwendet.

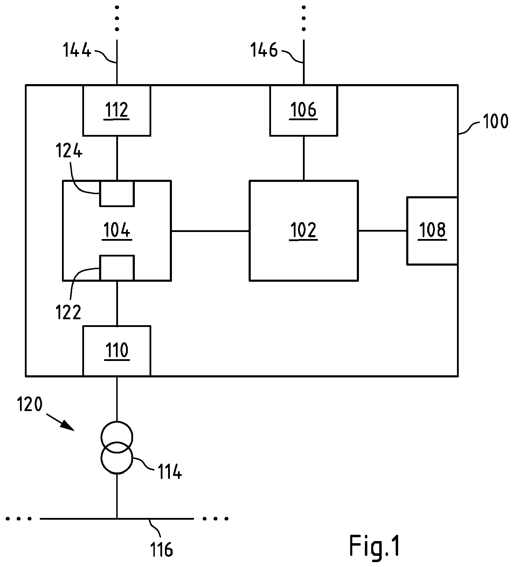

Die Figur 1 zeigt eine schematische Ansicht eines Ausführungsbeispiels einer Lastmanagementvorrichtung 100 gemäß der vorliegenden Anmeldung. Die Lastmanagementvorrichtung 100 kann insbesondere zwischen einem Ladeanordnungsanschluss 120 (umfassend z.B. mindestens einen Transformator 114) und einem Zwischenspannungsnetz 144 (mit mindestens einer Verteilleitung) bzw. - ebene der (nicht dargestellten) Ladeanordnung zwischenschaltbar sein.

Insbesondere kann die Lastmanagementvorrichtung 100 mindestens einen elektrischen Eingangsanschluss 110 und mindestens einen elektrischen Ausgangsanschluss 112 aufweisen, um die Lastmanagementvorrichtung 100 elektrisch mit dem Eingangsanschluss 120 einer Ladeanordnung und einem Anschluss des Zwischenspannungsnetzes 144 der Ladeanordnung zu verbinden.

Wie ferner zu erkennen ist, weist die Lastmanagementvorrichtung 100 mindestens ein Blindleistungskompensationsmodul 104 und mindestens ein Lastmanagementmodul 102 auf. Ein Eingang 122 des Blindleistungskompensationsmoduls 104 ist insbesondere mit dem Eingang 110 der Lastmanagementvorrichtung 100 verbunden und ein Ausgang 124 des Blindleistungskompensationsmoduls 104 ist insbesondere mit dem Ausgang 112 der Lastmanagementvorrichtung 100 verbunden. Anders ausgedrückt, die Ladeanordnung ist elektrisch mit einer Stromquelle 116, vorliegend ein elektrisches Verteilnetz 116, (nur) über das mindestens eine Blindleistungskompensationsmodul 104 verbunden. Ein elektrischer Strom fließt demnach vorliegend (stets) (nur) über das Blindleistungskompensationsmodul 104.

Wie bereits beschrieben wurde, kann vorzugsweise für jede elektrische Phase ein separates Blindleistungskompensationsmodul vorgesehen sein. Beispielsweise können bei einem dreiphasigen Wechselstromnetz drei separate Blindleistungskompensationsmodule vorgesehen sein.

Das mindestens eine durch das Lastmanagementmodul 102 ansteuerbare Blindleistungskompensationsmodul 104 ist eingerichtet zum Reduzieren der durch die Ladeanordnung verursachten Blindleistung. Das Lastmanagementmodul 102 ist eingerichtet zum Einstellen einer Leistungsverteilung an der Mehrzahl von Ladestationen, zumindest basierend auf mindestens einer Verteilregel und der maximal (an der Ladeanordnung insgesamt) verfügbaren Leistung.

Insbesondere kann die Lastmanagementvorrichtung 100 mindestens ein (drahtloses und/oder drahtgebundenes) Kommunikationsmodul 106 umfassen. Das Kommunikationsmodul kann an ein (drahtloses und/oder drahtgebundenes) Kommunikationsnetz 146 angeschlossen und insbesondere für eine bidirektionale Kommunikation mit der Mehrzahl von Ladestationen der Ladeanordnung eingerichtet sein. Das Lastmanagementmodul 102 kann insbesondere eingerichtet sein zum Einstellen der Leistungsverteilung an der Mehrzahl von Ladestationen durch Bewirken einer Aussendung mindestens einer Steuerinformation (umfassend mindestens ein (zuvor beschriebenen Leistungsverteilungssollwert) an mindestens eine Ladestation (vorzugsweise jede Ladestation der Ladeanordnung) durch das Kommunikationsmodul 106.

Anmeldungsgemäß ist ferner vorgesehen, dass das Lastmanagementmodul 102 eingerichtet ist zum Ansteuern des Blindleistungskompensationsmoduls 104, basierend auf mindestens einem bereitgestellten Blindleistungsparameter (z.B. über einen weiteren optionalen Kommunikationseingang 108) und der eingestellten Leistungsverteilung, derart, dass die durch die Ladeanordnung verursachte Blindleistung reduziert wird, vorzugsweise (nahezu) vollständig kompensiert wird. Die Funktionsweise wird näher mit Hilfe der nachfolgenden Ausführungsbeispiele beschrieben.

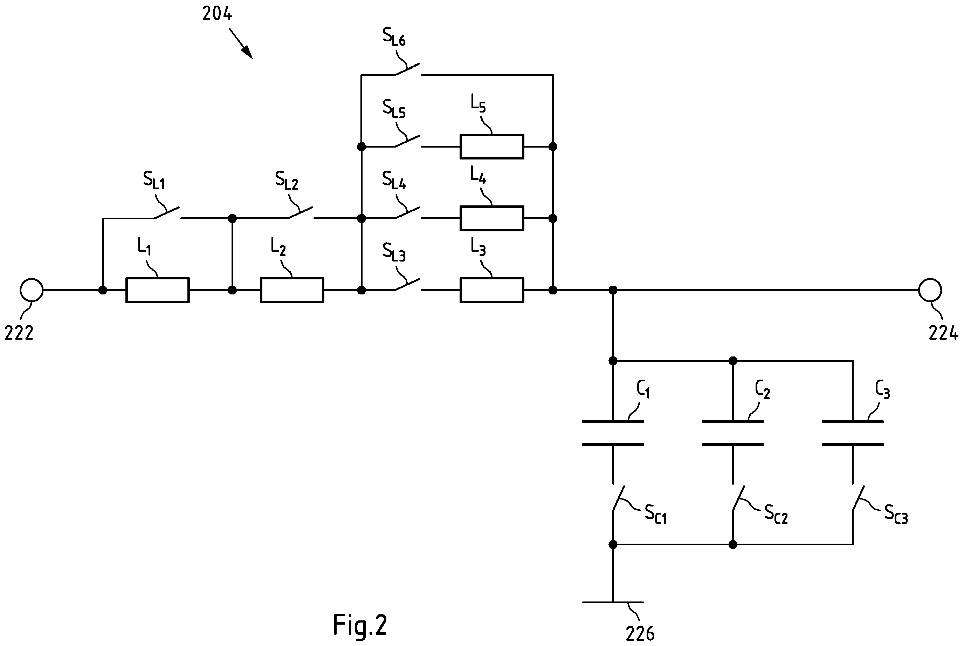

Die Figur 2 zeigt eine schematische Ansicht eines Ausführungsbeispiels eines Blindleistungskompensationsmoduls 204 gemäß der vorliegenden Anmeldung. Wie zu erkennen ist, weist das Blindleistungskompensationsmodul 204, insbesondere eine Blindleistungskompensationsschaltung 204, einen zuvor beschrieben Eingang 222 und einen zuvor beschrieben Ausgang 224 auf.

Ferner umfasst das Blindleistungskompensationsmodul 204 mindestens ein ansteuerbares Schaltelement S_{L1} bis S_{L6} und S_{C1} bis S_{C3} (vorzugsweise eine Vielzahl von Schaltelementen S_{L1} bis S_{L6} und S_{C1} bis S_{C3}) und mindestens einen kapazitiven Verbraucher C₁ bis C₃ und/oder mindestens einen induktiven Verbraucher L₁ bis L₅. Insbesondere kann jedem kapazitiven Verbraucher C₁ bis C₃ bzw. kapazitiven Bauelement C₁ bis C₃ (z.B. Kondensator) mindestens ein Schaltelement S_{C1} bis S_{C3} bzw. Schalter S_{C1} bis S_{C3} zugeordnet sein, um diesen Verbraucher C₁ bis C₃ (oder eine Verbrauchergruppe) (bei Bedarf) zuzuschalten bzw. wegzuschalten. Darüber hinaus kann jedem induktiven Verbraucher L₁ bis L₅ bzw. induktiven Bauelement (z.B. Induktivität) L₁ bis L₅ und/oder (jeder) (induktiven) Verbrauchergruppe ein Schaltelement S_{L1} bis S_{L6} bzw. Schalter S_{L1} bis S_{L6} zugeordnet sein, um diesen Verbraucher L₁ bis L₅ oder diese Verbrauchergruppe (bei Bedarf) zuzuschalten bzw. wegzuschalten.

Das Schaltelement S_{L1} bis S_{L6} und S_{C1} bis S_{C3} kann eingerichtet sein zum Hinzuschalten des mindestens einen kapazitiven Verbrauchers C₁ bis C₃ und/oder induktiven Verbrauchers S_{L1} bis S_{L6}, basierend auf einer Ansteuerinformation bzw. einem Ansteuersignal des Lastmanagementmoduls.

Die abgebildete Blindleistungskompensationsschaltung 204 ist für eine Phase vorgesehen. Für ein Mehrphasen-Netz kann daher eine entsprechende Anzahl von Blindleistungskompensationsmodulen 204 (für jede Phase eins) vorgesehen sein. Die Schaltung 204 weist einen Eingang 222 auf, der beispielsweise mit einem Transformator des Ladeanordnungseingangs elektrisch verbunden sein kann.

Ferner ist ein Ausgang 224 vorgesehen, der mit der Zwischenspannungsebene bzw. den an dieser Ebene angeschlossenen Ladestationen elektrisch verbunden sein kann.

Zur Kompensation von kapazitiven Lasten sind vorliegend die Induktivitäten L₁, L₂ und L₃ in Serie geschaltet. Jede Induktivität L₁ bis L₅ lässt sich mittels eines Schalters S_{L1} bis S_{L6} "zu" bzw. "weg" schalten. Dadurch lässt sich die resultierende induktive Reaktanz so einstellen, dass eine bestimmte Blindleistung kompensiert werden kann. Zur Feinjustierung der induktiven Reaktanz sind vorliegend die schaltbaren Induktivitäten L₃, L₄ und L₅ parallel zueinander geschaltet. Die Stellung der Schalter S_{L1} bis S_{L6} und S_{C1} bis S_{C3} werden durch Ansteuerungssignale des Lastmanagementmoduls bestimmt bzw. vorgegeben. Wenn eine relativ hohe induktive Reaktanz benötigt wird, können beispielsweise die Schalter S_{L1}, S_{L2} und S_{L3} geschlossen und S_{L4}, S_{L5} und S_{L6} offen geschaltet werden.

Zwischen dem Eingang 222 und dem N-Leiter 226 des (nicht dargestellten) Wechselstromsystems sind ferner vorliegend drei Kondensatoren parallel zueinander geschaltet (C₁ bis C₃). Mittels der ansteuerbaren Schalter S_{C1} bis S_{C3} kann eine bestimmte kapazitive Reaktanz eingestellt werden. Die genauen Kapazitäts- oder Induktivitätswerte sind systemabhängig und können insbesondere so dimensioniert sein, dass eine optimale Blindleistungskompensation des Ladesystems möglich ist. Es ist ebenso möglich, dass für eine Blindleistungskompensation zusätzliche (oder weniger) Kondensatoren und/oder Induktivitäten (Spulen) eingesetzt werden können. Wichtig ist insbesondere, dass die Kondensatoren bzw. die Spulen "zu" bzw. "weg" schaltbar sind, so dass ein bestimmter Bereich von kapazitiven bzw. induktiven Blindleistungen kompensier werden kann.

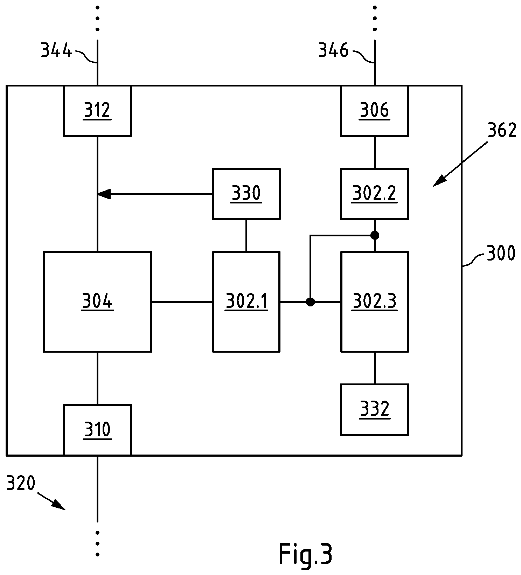

Die Figur 3 zeigt eine schematische Ansicht eines weiteren Ausführungsbeispiels einer Lastmanagementvorrichtung 300 gemäß der vorliegenden Anmeldung. Zur Vermeidung von Wiederholungen werden nachfolgend im Wesentlichen nur die Unterschiede zu den vorherigen Ausführungsbeispielen erläutert und ansonsten auf die obigen Ausführungen verwiesen.

Wie zu erkennen ist, weist die Lastmanagementvorrichtung 300 vorliegend ein Messmodul 330 auf, eingerichtet zum Messen (und/oder Bestimmen, basierend auf einem gemessenen Parameter) mindestens eines Blindleistungsparameters (z.B. Strom, Spannung, Scheinleistung, Wirkleistung, Blindleistung und/oder Netzfrequenz) der Ladeanordnung. Dieser mindestens eine Blindleistungsparameter kann insbesondere bei der Blindleistungskompensation berücksichtigt werden.

Das Lastmanagementmodul 302 ist vorliegend durch drei Elemente 302.1 bis 302.3 gebildet. Das Lastmanagementmodul 302 umfasst mindestens einen Blindleistungsregler 302.1, mindestens eine Lastmanagementsteuereinheit 302.2 und mindestens eine übergeordnete Steuereinheit 302.3, die insbesondere auf eine Datenbank 332 zugreifen kann.

Die mindestens eine Lastmanagementsteuereinheit 302.2 ist insbesondere eingerichtet, zum Einstellen der Leistungsverteilung an der Mehrzahl von Ladestationen, zumindest basierend auf der mindestens einen Verteilregel, der maximal an der Ladeanordnung verfügbaren Leistung und dem von der übergeordneten Steuereinheit 302.3 bereitgestellten Schaltzustand des Blindleistungskompensationsmoduls 304. Der Blindleistungsregler 302.2 ist insbesondere eingerichtet ist zum Ansteuern des Blindleistungskompensationsmodul 304, basierend auf dem mindestens einen bereitgestellten, insbesondere gemessenen und/oder bestimmten Blindleistungsparameter und der von der Steuereinheit 302.3 bereitgestellten, eingestellten Leistungsverteilung, derart, dass die durch die Ladeanordnung verursachte Blindleistung reduziert wird, insbesondere minimiert wird.

Beispielsweise kann der Blindleistungsregler 302.1 anhand des mindestens einen physikalisch gemessenen Blindleistungsparameters eine aktuelle Blindleistung der Ladeanordnung ermitteln. Anschließend berücksichtigt der Blindleistungsregler 302.1 die aktuelle Last der Ladeanordnung bzw. die eingestellte Leistungsverteilung. Die aktuelle Last des Ladesystems kann dem Blindleistungsregler 302.1 durch die übergeordnete Steuereinheit 302.3 (und/oder die Lastmanagementsteuereinheit 302.2) zur Verfügung gestellt werden. Insbesondere können die Komponenten 302.1 bis 302.3 kommunikationstechnisch miteinander verbunden sein. Der Blindleistungsregler 302.1 kann unter Berücksichtigung der aktuellen Blindleistung und der aktuellen Last das mindestens eine Ansteuersignal bzw. die Ansteuerinformation für das Blindleistungskommunikationsmodul 304 generieren, so dass die Blindleistung insbesondere bestmöglich kompensiert wird und ein (schnelles) Zu- und Wegschalten der physikalischen Komponente des Blindleistungskommunikationsmoduls 304 nicht notwendig ist.

Der Blindleistungsregler 302.1 und/oder die übergeordnete Steuereinheit 302.3 können insbesondere ein Optimierungsproblem lösen, bei dem die Blindleistung der Ladeanordnung möglichst auf 0 reduziert werden soll und als Nebenbedingung die Häufigkeit des Zu- und Wegschaltens der physikalischen Komponenten des Blindleistungskommunikationsmoduls 304 gering sein soll.

Bevorzugt kann der Blindleistungsregler 302.1 in einer Ausführungsform mittels einer Übersetzungstabelle (bzw. Lookup-Table) implementiert sein, so dass für ein bestimmtes Datentupel (aktuelle Last bzw. Leistungsverteilung, aktuelle Blindleistung) ein Satz an durchzuführenden Ansteuersignalen 300 hinterlegt ist. Die Lastmanagementsteuereinheit 302.2 kann, wie zuvor beschrieben, ein lokales Lastmanagement durchführen und hierfür insbesondere bidirektional unter Nutzung des Kommunikationsmoduls 306 mit den Ladestationen kommunizieren.

Bei einer Ausführungsform können die Lastmanagementsteuereinheit 302.1 und der Blindleistungsregler 302.2 weitgehend autonom agieren. Vorzugsweise können diese jedoch durch die übergeordnete Steuereinheit 302.3 (bzw. Regler) beeinflusst werden. Die Steuereinheit 302.3 kann beispielsweise den aktuellen Zustand der Ladeanordnung erfassen und eine mögliche Handlungsanweisung an die Lastmanagementsteuereinheit 302.2 und/oder den Blindleistungsregler 302.1 geben, vorzugsweise zusätzlich basierend auf vorliegenden historischen Daten (z.B. historische Zustände der Ladeanordnung, die in der Datenbank 332 gespeichert sein können). Sofern die generierte Handlungsanweisung nicht mit der Handlungsanweisung der Lastmanagementsteuereinheit 302.2 und/oder des Blindleistungsreglers 302.1 in Einklang zu bringen ist, kann die Handlungsanweisung der übergeordneten Steuereinheit 302.3 befolgt werden. Die übergeordnete Steuereinheit 302.3 kann beispielsweise einen maschinellen Lernalgorithmus (bspw. ein neuronales Netz oder dergleichen) umfassen.

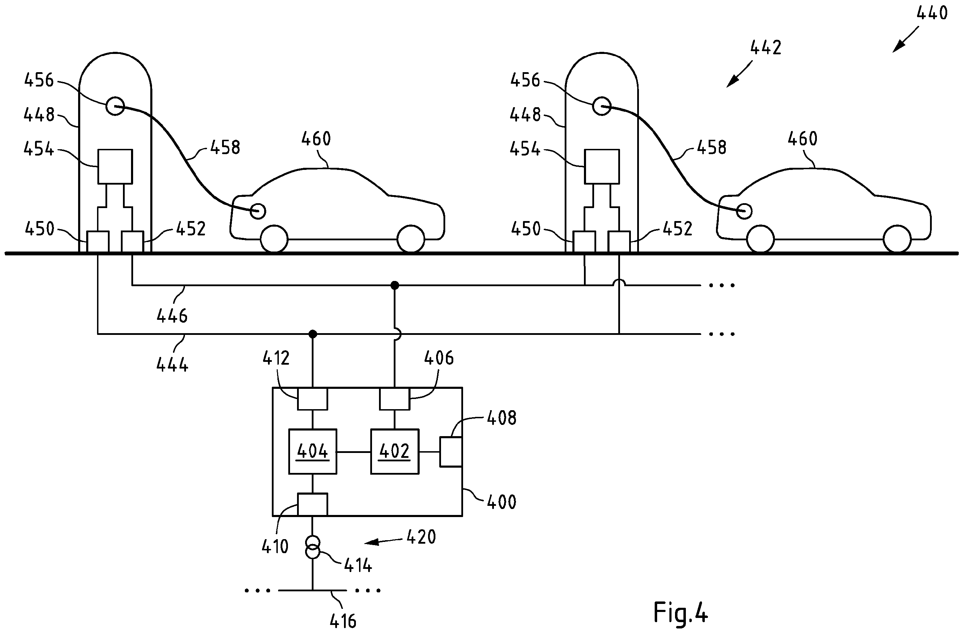

Die Figur 4 zeigt eine schematische Ansicht eines Ausführungsbeispiels eines Ladesystems 440 gemäß der vorliegenden Anmeldung. Das Ladesystem 440 ist insbesondere zum Laden von Elektrofahrzeuge 460 eingerichtet und umfasst vorliegend mindestens eine Ladeanordnung 442 mit einer Mehrzahl von Ladestationen 448 (vorliegend sind beispielhaft zwei Ladestation 448 gezeigt) und mindestens eine zuvor beschriebene Lastmanagementvorrichtung 400 (z.B. die in Figur 1 oder 3 gezeigte Vorrichtung).

Eine Ladestation 448 umfasst mindestens einen Ladepunkt 456. Der Ladepunkt 456 kann insbesondere durch einen Ladeanschluss 456 gebildet sein, der eigerichtet ist, um ein Elektrofahrzeug 460 (insbesondere zumindest dessen Traktionsbatterie) über ein Ladekabel 458 zu laden (oder zu entladen). Die dargestellten Ladestationen 448 (insbesondere Ladesäulen) umfasst ein Gehäuse, in dem eine Ladevorrichtung 454 (z.B. eine Ladetechnik, die mit dem Ladeanschluss 450 gekoppelt ist) integriert sein kann. Ferner ist zu erkennen, dass die Ladestationen 448 mit einem elektrischen Netz 444, insbesondere ein Zwischenspannungsnetz 444 (bzw. Zwischenspannungsebene) verbunden sein können, um eine Leistungsabgabe (oder auch Leistungsaufnahme) in herkömmlicher Weise unter Nutzung der Ladevorrichtung 454 zu ermöglichen.

Darüber hinaus kann jede Ladestation 448 über ein Kommunikationsmodul 452 verfügen, welches an ein (drahtloses und/oder drahtgebundenes) Kommunikationsnetz 446 angeschlossen sein kann. Dies ermöglicht insbesondere die zuvor beschriebene bidirektionale Kommunikation und insbesondere eine Leistungsverteilung durch die Lastmanagementvorrichtung 400 entsprechend mindestens einer Verteilregel, wie zuvor beschrieben wurde.

Beispielsweise kann die Ladeanordnung 442 in einem Parkhaus und/oder auf einem Parkplatz eingesetzt werden. Die Ladestationen 448 können insbesondere kapazitiv oder induktiv elektrische Leistung über ein Ladekabel 458 an ein Elektrofahrzeug 460 übertragen. Dies meint insbesondere, dass Blindleistung während eines Ladevorgangs, also während des Leistungsaustausches, entstehen kann, aufgrund der eingesetzten elektrischen Bauteile.

Die Ladestation 448 ist vorzugsweise dreiphasig an eine Wechselstrom (AC)-Zwischenspannungsebene 444 angeschlossen. Es ist auch möglich, dass eine Ladestation 448 nur an einer Phase der AC-Zwischenspannungsebene 444 angeschlossen ist. Die AC-Zwischenspannungsebene 444 ist insbesondere über einen Ladeanordnungsanschluss 420, umfassend einen Transformator 414 (Trafo), an ein elektrisches Versorgungsnetz 416 gekoppelt. Die in der AC-Zwischenspannungsebene 444 zur Verfügung stehende Leistung kann gemäß einem Lastmanagementalgorithmus (bzw. einer Verteilregel) durch die Lastmanagementvorrichtung 400 auf die Ladestationen 448 des Parkhauses aufgeteilt werden, wie zuvor beschrieben wurde.

Die zum Laden von Elektrofahrzeugen 460 notwendige Leistung der gesamten Ladeanordnung 442 kann variieren. Daher kann davon gesprochen werden, dass bei der Ladeanordnung 442 in der Praxis mehrere Arbeitspunkte eingestellt werden bzw. sich einstellen. In der Regel können Ladestationen 448 bis zu 22 kW elektrische Wirkleistung liefern. Es versteht sich, dass auch andere Leistungswerte möglich sind. Die verursachte physikalische Blindleistung ist bei einer derartigen Ladeanordnung von mehreren Faktoren abhängig, wie z.B. der im zu ladenden Elektrofahrzeug 460 verwendeten Gleichrichter, den verwendeten Ladekabel etc..

In der AC-Zwischenspannungsebene 444 ist vorliegend eine Lastmanagementvorrichtung 400 eingefügt. Die Lastmanagementvorrichtung 400 umfasst, wie zuvor beschrieben wurde, ein Lastmanagementmodul 402 und ein Blindleistungskompensationsmodul 404. Vorzugsweise kann für jede Phase der AC-Zwischenspannungsebene 444 ein Blindleistungskompensationsmodul 404 implementiert sein. Somit können bei einem dreiphasigen Wechselstromsystem 444 bis zu drei Blindleistungskompensationsmodule 404 verwendet werden. Eine Ausführungsform eines Blindleistungskompensationsmodul 404 ist in Figur 2 beschrieben.

Die Lastmanagementvorrichtung 400 besitzt im Wesentlichen zwei Aufgaben. Zum einen führt die Lastmanagementvorrichtung 400 das beschriebene lokale Lastmanagement für die an der AC-Zwischenspannungsebene 444 angeschlossenen Ladestationen 448 durch. Zum anderen regelt die Lastmanagementvorrichtung 400 insbesondere eine Blindleistungskompensation.

Der wesentliche Vorteil an der Lastmanagementvorrichtung 400 ist es, dass das Lastmanagement sehr gut auf die Blindleistungskompensation abgestimmt werden kann, da beides in einer physikalischen Vorrichtung 400 (insbesondere in einem gemeinsamen Gehäuse) durchgeführt wird. Dadurch sind wesentliche schnellere Reaktionszeiten möglich. Beispielsweise ist es mittels des Lastmanagements insbesondere möglich, dass der Arbeitspunkt des Gesamtsystems möglichst lange konstant gehalten wird. In einem solchen Fall kann die Regelung der Blindleistungskompensation besser erfolgen, da sich nicht ständig auf einen neuen Arbeitspunkt eingerichtet werden muss.

Ein Arbeitspunkt in einem solchen System 440 kann beispielsweise dadurch möglichst lange gehalten werden, dass man die maximal mögliche Leistung einer jeder Ladestation 448 im Vorfeld limitiert bzw. herabsetzt, so dass man im Bedarfsfall eine Art Leistungsreserve verfügbar ist. Beispielsweise kann dann bei Beendigung eines Ladevorgangs an einer Ladestation 448 die an der weiteren Ladestation 448 verfügbare Leistung entsprechend erhöht werden, um den Arbeitspunkt des Gesamtsystems gleich zu lassen.

Ebenso ist es denkbar, dass die in der AC-Zwischenspannungsebene 444 zur Verfügung stehende Wirkleistung im Vorfeld limitiert bzw. abgesenkt ist, um ebenso über Leistungsreserven zu verfügen. In diesem Fall kann die Lastmanagementvorrichtung 400 beispielsweise dem Transformator 414 entsprechende Steuersignale senden.

Ein lokales Lastmanagement der Lastmanagementvorrichtung 400 kann beispielsweise auf der Anwendung von mindestens einer Verteilregel bzw. einem Verteilalgorithmus basieren (z.B. "first come - first serve", "equal charging", "stair charging" etc.), wie oben beschrieben wurde. Es versteht sich, dass zusätzlich Vorgaben von der Netzseite gemacht werden können.

Ein lokales Lastmanagement kann über eine bidirektionale Kommunikationsverbindung 446 zwischen jeweils einer Ladestation 448 und der Lastmanagementvorrichtung 400 durchgeführt werden. Mittels der bidirektionalen Kommunikationsverbindung 446 kann die Lastmanagementvorrichtung 400 beispielsweise Steuersignale bzw. eine Steuerinformation (z.B. enthaltend einen zuvor beschriebenen Solldatensatz) an eine Ladestation 448 übertragen und/oder (Zustands-)Informationen bzw. Rückmeldungen von der Ladestation 448 erhalten.

Die Blindleistungskompensation der Lastmanagementvorrichtung 400 wird mittels des zuvor beschriebenen Blindleistungskommunikationsmoduls 404 durchgeführt. Das Lastmanagementmodul kann hierzu Steuersignale an das Blindleistungskommunikationsmodul 404 senden und z.B. mindestens einen gemessenen Blindleistungsparameter empfangen, welcher in oder rund um das Blindleistungskommunikationsmodul 404 gemessen und/oder ermittelt wird. Nach Auswertung des mindestens einen gemessenen Blindleistungsparameters kann das Blindleistungskommunikationsmodul 404 so angesteuert werden, dass die Blindleistung des Ladesystems 440 minimiert wird.

Ein wesentlicher Unterschied zum bekannten Stand der Technik ist, dass die Ladestationen 448 (auch) (nur) einphasig ein Elektrofahrzeug 460 laden (können). Dies hat zu Folge, dass die Phasen unterschiedlich belastet werden können. Resultierend kann eine phasenindividuelle Blindleistungskompensation notwendig sein. Mittels der vorliegenden Lehre kann eine phasenindividuelle Blindleistungskompensation (relativ einfach) implementiert werden, da jede Phase über ein eigenes Blindleistungskommunikationsmodul 404 verfügen kann.

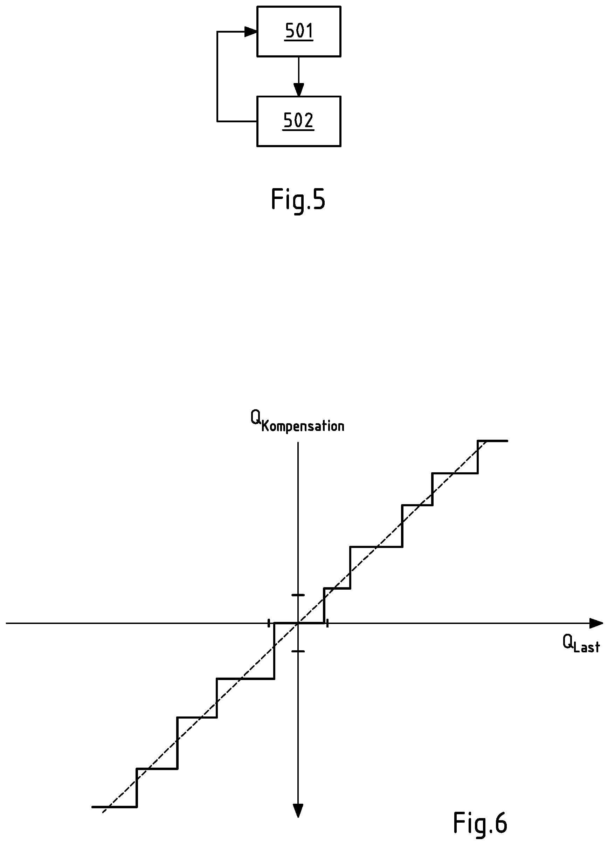

Die Figur 5 zeigt ein Diagramm eines Ausführungsbeispiels eines Verfahrens gemäß der vorliegenden Anmeldung.

In einem ersten Schritt 501 kann eine elektrische Leistungsverteilung an der Mehrzahl von Ladestationen eingestellt werden (wie zuvor beschrieben wurde), zumindest basierend auf mindestens einer Verteilregel und der verfügbaren Leistung.

Dann kann in Schritt 502 ein Blindleistungskompensationsmodul angesteuert werden (wie zuvor beschrieben wurde), basierend auf mindestens einem bereitgestellten Blindleistungsparameter und der eingestellten Leistungsverteilung, derart, dass die durch die Ladeanordnung verursachte Blindleistung reduziert wird. Es versteht sich, dass die Schritte 501 und 502 zumindest teilweise parallel durchgeführt werden können.

Die Figur 6 zeigt ein Diagramm zur Erläuterung der Blindleistungskompensation gemäß einem Ausführungsbeispiel der vorliegenden Anmeldung. Insbesondere ist beispielhaft ein Koordinatensystem hinsichtlich der Blindleistungen in der Figur 6 skizziert. Die Abszisse kennzeichnet eine aktuelle vorhandene Blindleistung der Last (QLast). Die Ordinate kennzeichnet eine aktuelle vorhandene Blindleistung des Blindleistungskompensationsmoduls (eine genaue Achsenskalierung ist zum Verständnis nicht notwendig).

Der Idealfall einer Blindleistungskompensation ist durch die gestrichelte Gerade dargestellt. im Idealfall wird die komplette Blindleistung der Last durch die Blindleistung des Blindleistungskompensationsmoduls kompensiert (im realen Betrieb wird diese Gerade nicht erreicht). Mittels der eingezeichneten Stufenfunktion wird das Funktionsprinzip der Anmeldung beispielhaft erläutert. Es versteht sich, dass in der Praxis auch dieser Verlauf nicht exakt stufenartig ausgebildet ist, da der Strom und die Spannung im Ladesystem dynamisch sind und variieren können. Es ist nur wichtig darzustellen, dass die aktuelle vorhandene Blindleistung des Blindleistungskompensationsmoduls durch Zu- bzw. Wegschalten von Kondensatoren und/oder Spulen sprungartig verändert werden kann. Dies ist mittels der Sprünge in der Funktion veranschaulicht.

## Patentansprüche

1. Lastmanagementvorrichtung (100, 300, 400) für eine Ladeanordnung (442) mit einer Mehrzahl von Ladestationen (448) zum Laden von Elektrofahrzeugen (460), umfassend:
- mindestens ein Lastmanagementmodul (102, 302, 402), eingerichtet zum Einstellen einer Leistungsverteilung an der Mehrzahl von Ladestationen (448), zumindest basierend auf mindestens einer Verteilregel und einer maximal verfügbaren Leistung,
**dadurch gekennzeichnet,**
- **dass** die Lastmanagementvorrichtung (100, 300, 400) mindestens ein ansteuerbares Blindleistungskompensationsmodul (104, 204, 404), eingerichtet zum Reduzieren einer durch die Ladeanordnung (442) verursachten Blindleistung, umfasst,
- wobei das Lastmanagementmodul (102, 302, 402) eingerichtet ist zum Ansteuern des Blindleistungskompensationsmoduls (104, 204, 404), basierend auf mindestens einem bereitgestellten Blindleistungsparameter und der eingestellten Leistungsverteilung, derart, dass die durch die Ladeanordnung (442) verursachte Blindleistung reduziert wird.

2. Lastmanagementvorrichtung (100, 300, 400) nach Anspruch 1, **dadurch gekennzeichnet, dass**
- das Blindleistungskompensationsmodul (104, 204 〉 404) mindestens ein ansteuerbares Schaltelement (S_{L1} bis S_{L6}, S_{C1} bis Scs) und mindestens einen kapazitiven Verbraucher (C₁ bis C₃) und/oder mindestens einen induktiven Verbraucher (L₁ bis L₅) umfasst,
- wobei das Schaltelement (S_{L1} bis S_{L6}, S_{C1} bis S_{C3}) eingerichtet ist zum Hinzuschalten des mindestens einen kapazitiven Verbrauchers (C₁ bis C₃) und/oder des mindestens einen induktiven Verbraucher (L₁ bis L₅), basierend auf einer Ansteuerinformation des Lastmanagementmoduls (102, 302, 402).

3. Lastmanagementvorrichtung (100, 300, 400) nach Anspruch 1 oder 2, **dadurch gekennzeichnet, dass**
- das Lastmanagementmodul (102, 302, 402) eingerichtet ist zum Einstellen der Leistungsverteilung an der Mehrzahl von Ladestationen (448), basierend auf einem eingestellten Schaltzustand des Blindleistungskompensationsmoduls (104, 204, 404).

4. Lastmanagementvorrichtung (100, 300, 400) nach einem der vorherigen Ansprüche, **dadurch gekennzeichnet, dass**
- die Lastmanagementvorrichtung (100, 300, 400) mindestens ein Kommunikationsmodul (106, 306, 406) umfasst, und
- das Lastmanagementmodul (102, 302, 402) eingerichtet ist zum Einstellen der Leistungsverteilung an der Mehrzahl von Ladestationen (448) durch Bewirken einer Aussendung mindestens einer Steuerinformation an mindestens eine Ladestation (448) durch das Kommunikationsmodul (106, 306, 406).

5. Lastmanagementvorrichtung (100, 300, 400) nach einem der vorherigen Ansprüche, **dadurch gekennzeichnet, dass**
- der mindestens eine bereitgestellte Blindleistungsparameter ausgewählt ist aus der Gruppe, umfassend:
- Strom,
- Spannung,
- Scheinleistung,
- Wirkleistung,
- Blindleistung,
- Netzfrequenz,
- wobei insbesondere die Lastmanagementvorrichtung (100, 300, 400) mindestens ein Messmodul (330) umfasst, eingerichtet zum Messen des mindestens einen Blindleistungsparameters.

6. Lastmanagementvorrichtung (100, 300, 400) nach einem der vorherigen Ansprüche, **dadurch gekennzeichnet, dass**
- das Lastmanagementmodul (102, 302, 402) mindestens einen Blindleistungsregler (302.1), mindestens eine Lastmanagementsteuereinheit (302.2) und mindestens eine übergeordnete Steuereinheit (302.3) umfasst,
- wobei die mindestens eine Lastmanagementsteuereinheit (302.2) eingerichtet ist zum Einstellen der Leistungsverteilung an der Mehrzahl von Ladestationen (448), zumindest basierend auf der mindestens einen Verteilregel, der maximal verfügbaren Leistung und dem von der übergeordneten Steuereinheit (302.3) bereitgestellten Schaltzustand des Blindleistungskompensationsmoduls (104, 304, 404),
- wobei der Blindleistungsregler (302.1) eingerichtet ist zum Ansteuern des Blindleistungskompensationsmoduls (104, 304, 404), basierend auf dem mindestens einen bereitgestellten Blindleistungsparameter und der von der übergeordneten Steuereinheit (302.3) bereitgestellten, eingestellten Leistungsverteilung, derart, dass die durch die Ladeanordnung (442) verursachte Blindleistung reduziert wird.

7. Lastmanagementvorrichtung (100, 300, 400) nach Anspruch 6, **dadurch gekennzeichnet, dass**
- die Steuereinheit (302.3) ferner eingerichtet ist zum Ansteuern des Blindleistungsreglers (302.1) und/oder der Lastmanagementsteuereinheit (302.2), basierend auf historischen Schaltzuständen des Blindleistungskompensationsmoduls (104, 304, 404) und/oder historischen Ladezuständen der Ladeanordnung (442).

8. Ladesystem (440) für Elektrofahrzeuge (460), umfassend:
- mindestens eine Ladeanordnung (442) mit einer Mehrzahl von Ladestationen (448), und
- mindestens eine Lastmanagementvorrichtung (100, 300, 400) nach einem der vorherigen Ansprüche,

9. Verfahren zum Betrieben ein Ladesystem nach dem vorherigen Anspruch, umfassend:
- Einstellen einer Leistungsverteilung an der Mehrzahl von Ladestationen (448), zumindest basierend auf mindestens einer Verteilregel und der verfügbaren Leistung, **dadurch gekennzeichnet,**
- **dass** das Verfahren ein Ansteuern eines Blindleistungskompensationsmoduls (102, 302, 402), basierend auf mindestens einem bereitgestellten Blindleistungsparameter und der eingestellten Leistungsverteilung, derart, dass die durch die Ladeanordnung (442) verursachte Blindleistung reduziert wird, umfasst.

10. Computerprogramm mit Instruktionen ausführbar auf einem Prozessor der Lastmanagementvorrichtung (100, 300, 400), gemäß einem der Ansprüche 1-7, so dass das Verfahren nach Anspruch 9 betrieben wird.

## Claims

1. Load management device (100, 300, 400) for a charging arrangement (442) having a plurality of charging stations (448) for charging electric vehicles (460), comprising:
- at least one load management module (102, 302, 402) configured to set a power distribution at the plurality of charging stations (448) at least based on at least one distribution rule and a maximum available power, **characterized in that**
- the load management device (100, 300, 400) comprises at least one activatable reactive power compensation module (104, 204, 404) configured to reduce a reactive power caused by the charging arrangement (442),
- wherein the load management module (102, 302, 402) is configured to activate the reactive power compensation module (104, 204, 404) based on at least one provided reactive power parameter and the set power distribution such that the reactive power caused by the charging arrangement (442) is reduced.

2. Load management device (100, 300, 400) according to Claim 1, **characterized in that**
- the reactive power compensation module (104, 204, 404) comprises at least one activatable switching element (S_{L1} to S_{L6}, S_{C1} to S_{C3}) and at least one capacitive consumer (C₁ to C₃) and/or at least one inductive consumer (L₁ to L₅),
- wherein the switching element (S_{L1} to S_{L6}, S_{C1} to S_{C3}) is configured to switch in the at least one capacitive consumer (C₁ to C₃) and/or the at least one inductive consumer (L₁ to L₅) based on activation information of the load management module (102, 302, 402) .

3. Load management device (100, 300, 400) according to Claim 1 or 2, **characterized in that**
- the load management module (102, 302, 402) is configured to set the power distribution at the plurality of charging stations (448) based on a set switching state of the reactive power compensation module (104, 204, 404).

4. Load management device (100, 300, 400) according to one of the preceding claims, **characterized in that**
- the load management device (100, 300, 400) comprises at least one communication module (106, 306, 406), and
- the load management module (102, 302, 402) is configured to set the power distribution at the plurality of charging stations (448) by bringing about transmission of at least one item of control information to at least one charging station (448) by way of the communication module (106, 306, 406).

5. Load management device (100, 300, 400) according to one of the preceding claims, **characterized in that**
- the at least one provided reactive power parameter is selected from the group comprising:
- current,
- voltage,
- apparent power,
- active power,
- reactive power,
- grid frequency,
- wherein the load management device (100, 300, 400) in particular comprises at least one measuring module (330) configured to measure the at least one reactive power parameter.

6. Load management device (100, 300, 400) according to one of the preceding claims, **characterized in that**
- the load management module (102, 302, 402) comprises at least one reactive power controller (302.1), at least one load management control unit (302.2) and at least one superordinate control unit (302.3),
- wherein the at least one load management control unit (302.2) is configured to set the power distribution at the plurality of charging stations (448) at least based on the at least one distribution rule, the maximum available power and the switching state of the reactive power compensation module (104, 304, 404) as provided by the superordinate control unit (302.3),
- wherein the reactive power controller (302.1) is configured to activate the reactive power compensation module (104, 304, 404) based on the at least one provided reactive power parameter and the set power distribution provided by the superordinate control unit (302.3) such that the reactive power caused by the charging arrangement (442) is reduced.

7. Load management device (100, 300, 400) according to Claim 6, **characterized in that**
- the control unit (302.3) is furthermore configured to activate the reactive power controller (302.1) and/or the load management control unit (302.2) based on historical switching states of the reactive power compensation module (104, 304, 404) and/or historical states of charge of the charging arrangement (442).

8. Charging system (440) for electric vehicles (460), comprising:
- at least one charging arrangement (442) having a plurality of charging stations (448), and
- at least one load management device (100, 300, 400) according to one of the preceding claims.

9. Method for operating a charging system according to the preceding claim, comprising:
- setting a power distribution at the plurality of charging stations (448) at least based on at least one distribution rule and the available power, **characterized in that**
- the method comprises activating a reactive power compensation module (102, 302, 402) based on at least one provided reactive power parameter and the set power distribution such that the reactive power caused by the charging arrangement (442) is reduced.

10. Computer program comprising instructions able to be executed on a processor of the load management device (100, 300, 400) according to one of Claims 1-7 such that the method according to Claim 9 is carried out.

## Revendications

1. Dispositif de gestion de charge (100, 300, 400) pour un arrangement de charge (442) comprenant une pluralité de bornes de charge (448) servant à charger des véhicules électriques (460), comprenant :
- au moins un module de gestion de charge (102, 302, 402), conçu pour régler une distribution de puissance au niveau de la pluralité de bornes de charge (448) en se basant au moins sur une règle de distribution et une puissance maximale disponible,
**caractérisé en ce**
- **que** le dispositif de gestion de charge (100, 300, 400) comporte au moins un module de compensation de puissance réactive (104, 204, 404), conçu pour réduire une puissance réactive causée par l'arrangement de charge (442),
- le module de gestion de charge (102, 302, 402) étant conçu pour commander le module de compensation de puissance réactive (104, 204, 404) en se basant sur au moins un paramètre de charge réactive fourni et la distribution de puissance réglée de telle sorte que la puissance réactive causée par l'arrangement de charge (442) est réduite.

2. Dispositif de gestion de charge (100, 300, 400) selon la revendication 1, **caractérisé en ce que**
- le module de compensation de puissance réactive (104, 204, 404) comporte au moins un élément de commutation (S_{L1} à S_{L6}, S_{C1} à S_{C3}) commandable et au moins un consommateur capacitif (C₁ à C₃) et/ou au moins un consommateur inductif (L₁ à L₅),
- l'élément de commutation (S_{L1} à S_{L6}, S_{C1} à S_{C3}) étant conçu pour mettre en circuit l'au moins un consommateur capacitif (C₁ à C₃) et/ou l'au moins un consommateur inductif (L₁ à L₅) en se basant sur une information de commande du module de gestion de charge (102, 302, 402).

3. Dispositif de gestion de charge (100, 300, 400) selon la revendication 1 ou 2, **caractérisé en ce que**
- le module de gestion de charge (102, 302, 402) est conçu pour régler la distribution de puissance au niveau de la pluralité de bornes de charge (448) en se basant sur un état de commutation réglé du module de compensation de puissance réactive (104, 204, 404).

4. Dispositif de gestion de charge (100, 300, 400) selon l'une des revendications précédentes, **caractérisé en ce que**
- le dispositif de gestion de charge (100, 300, 400) comprend au moins un module de communication (106, 306, 406), et
- le module de gestion de charge (102, 302, 402) est conçu pour régler la distribution de puissance au niveau de la pluralité de bornes de charge (448) en provoquant une émission d'au moins une information de commande à au moins une borne de charge (448) par le module de communication (106, 306, 406).

5. Dispositif de gestion de charge (100, 300, 400) selon l'une des revendications précédentes, **caractérisé en ce que**
- l'au moins un paramètre de puissance réactive fourni est choisi du groupe comprenant :
- courant,
- tension,
- puissance apparente,
- puissance active,
- puissance réactive,
- fréquence du réseau,
- le dispositif de gestion de charge (100, 300, 400) comprenant notamment au moins un module de mesure (330), conçu pour mesurer l'au moins un paramètre de puissance réactive.

6. Dispositif de gestion de charge (100, 300, 400) selon l'une des revendications précédentes, **caractérisé en ce que**
- le module de gestion de charge (102, 302, 402) comprend au moins un régulateur de puissance réactive (302.1), au moins une unité de commande de gestion de charge (302.2) et au moins une unité de commande de niveau supérieur (302.3),
- l'au moins une unité de commande de gestion de charge (302.2) étant conçue pour régler la distribution de puissance au niveau de la pluralité de bornes de charge (448) en se basant sur l'au moins une règle de distribution, la puissance maximale disponible et l'état de commutation du module de compensation de puissance réactive (104, 304, 404) fourni par l'unité de commande de niveau supérieur (302.3),
- le régulateur de puissance réactive (302.1) étant conçu pour commander le module de compensation de puissance réactive (104, 304, 404) en se basant sur l'au moins un paramètre de puissance réactive fourni et la distribution de puissance réglée, fournie par l'unité de commande de niveau supérieur (302.3), de telle sorte que la puissance réactive causée par l'arrangement de charge (442) est réduite.

7. Dispositif de gestion de charge (100, 300, 400) selon la revendication 6, **caractérisé en ce que**
- l'unité de commande (302.3) est en outre conçue pour commander le régulateur de puissance réactive (302.1) et/ou l'unité de commande de gestion de charge (302.2) en se basant sur des états de commutation historiques du module de compensation de puissance réactive (104, 304, 404) et/ou des états de charge historiques de l'arrangement de charge (442).

8. Système de charge (440) pour véhicules électriques (460), comprenant :
- au moins un arrangement de charge (442) comprenant une pluralité de bornes de charge (448) et
- au moins un dispositif de gestion de charge (100, 300, 400) selon l'une des revendications précédentes.

9. Procédé pour faire fonctionner un système de charge selon la revendication précédente, comprenant :
- réglage d'une distribution de puissance au niveau de la pluralité de bornes de charge (448) en se basant au moins sur une règle de distribution et la puissance disponible,
caractérisé en ce
- le procédé comprend une commande d'un module de gestion de charge (102, 302, 402) en se basant sur au moins un paramètre de puissance réactive fourni et la distribution de puissance réglée, de telle sorte que la puissance réactive causée par l'arrangement de charge (442) est réduite.

10. Programme informatique comprenant des instructions exécutables sur un processeur du dispositif de gestion de charge (100, 300, 400) selon l'une des revendications 1 à 7, de sorte que le procédé selon la revendication 9 est mis en œuvre.
